# EUROPÄISCHE PATENTSCHRIFT

(11) **EP 3 741 029 B1**
(45) Veröffentlichungstag und Bekanntmachung des Hinweises auf die Patenterteilung: **16.09.2026**
(21) Anmeldenummer: 18703212.3
(22) Anmeldetag: 16.01.2018
(51) Int. Cl.: H02K 3/52, H02K 15/022, H02K 15/33

(54) **KONTAKTELEMENT ZUR ELEKTRISCHEN KONTAKTIERUNG EINES WICKLUNGSDRAHTS EINES STATORS EINES ELEKTROMOTORS**
CONTACT ELEMENT FOR ELECTRICAL CONTACTING OF A WINDING WIRE OF A STATOR OF AN ELECTRIC MOTOR
ÉLÉMENT DE CONTACT POUR ÊTRE BRANCHÉ D'UN FIL D'UN ENROULEMENT D'UN STATOR D'UN MOTEUR ÉLECTRIQUE

(43) Veröffentlichungstag der Anmeldung: 25.11.2020
(73) Patentinhaber: Pierburg GmbH, 41460 Neuss (DE)
(72) Erfinder: HENKE, Toni, 41460 Neuss (DE); SUSWEDYK, Martin, 41460 Neuss (DE)
(74) Vertreter: Eisenführ Speiser
(86) Internationale Anmeldenummer: PCT/EP2018/050957
(87) Internationale Veröffentlichungsnummer: WO 2019/141344

(56) Entgegenhaltungen:
- EP-A2- 2 698 902
- DE-A1- 102015 216 698
- DE-A1- 2 924 906
- US-A1- 2017 110 925

## Beschreibung

Die Erfindung betrifft ein Kontaktelement zur elektrischen Kontaktierung mindestens eines Wicklungsdrahts eines Stators eines Elektromotors.

Elektromotoren weisen in der Regel mindestens eine Statorspule auf, welche durch Bewicklung eines Statorkörpers mit einem Wicklungsdraht hergestellt wird. Der Wicklungsdraht muss elektrisch kontaktiert werden, um die Statorspule während des Betriebs des Elektromotors ansteuern zu können. Hierfür sind entsprechende Kontaktelemente vorgesehen, welche eine zuverlässige und einfache externe elektrische Kontaktierung des Wicklungsdrahts ermöglichen.

Derartige Kontaktelemente zur elektrischen Kontaktierung eines Wicklungsdrahts sind beispielweise aus der DE 10 2013 105 571 A1 und der DE 10 2011 120 985 A1 bekannt.

Die DE 10 2013 105 571 A1 schlägt ein Kontaktelement mit einem planaren Basisteil vor. An dem Basisteil sind auf einer ersten Seite zwei sich senkrecht zur Erstreckungsebene des Basisteils erstreckende Beine zur Befestigung des Kontaktelements an einem Stator angeordnet. Auf einer der ersten Seite gegenüberliegenden zweiten Seite ist eine sich senkrecht zur Erstreckungsebene des Basisteils erstreckende Kontaktfahne zur externen elektrischen Kontaktierung des Kontaktelements angeordnet. Auf der zweiten Basisteilseite sind ferner zwei hakenförmige Haltevorrichtungen für die Aufnahme und die elektrische Kontaktierung eines Wicklungsdraht angeordnet. Das Kontaktelement wird durch Umformen eines Stanzrohlings hergestellt.

Die DE 10 2011 120 985 A1 schlägt ein Kontaktelement mit einer Kontaktfahne zur externen elektrischen Kontaktierung des Kontaktelements und mit einer Haltevorrichtung zur Aufnahme und zur elektrischen Kontaktierung eines Wicklungsdraht vor. Die Kontaktfahne ist planar und erstreckt sich im Wesentlichen entlang einer Längsachse. Die Haltevorrichtung ist an einer Querseite der Kontaktfahne angeordnet und weist eine dreidimensionale Form mit mehreren Biegungen auf.

Die vorgeschlagenen Kontaktelemente müssen nach dem Bewickeln des Statorkörpers an diesem angebracht werden, da sie andernfalls den Wickelvorgang behindern würden. Die vorgeschlagenen Kontaktelemente sind komplex aufgebaut und erfordern eine aufwendige Herstellung mit mehreren Umformschritten. Ferner ist für die vorgeschlagenen Kontaktelemente ein großer Platzbedarf auf dem Stator erforderlich.

Weitere konstruktive Ausführungen von Kontaktelementen zur elektrischen Kontaktierung eines Wicklungsdrahts werden in der DE2924906 A1, der US 2017/01110925 A1, der DE 10 2015 216 698 A1 und der EP 2 698 902 A2 beschrieben. Auch diese Kontaktelemente sind jedoch komplex aufgebaut und erfordern eine aufwendige Herstellung mit mehreren Umformschritten.

Es stellt sich daher die Aufgabe, ein einfaches und kompaktes Kontaktelement zur zuverlässigen elektrischen Kontaktierung mindestens eines Wicklungsdrahts eines Stators eines Elektromotors zu schaffen. Diese Aufgabe wird durch ein Kontaktelement zur elektrischen Kontaktierung mindestens eines Wicklungsdrahts eines Stators eines Elektromotors mit den Merkmalen des Hauptanspruchs 1 gelöst. Vorteilhafte Ausgestaltungen des erfindungsgemäßen Kontaktelements werden in den abhängigen Ansprüchen beschrieben.

Das erfindungsgemäße Kontaktelement zur elektrischen Kontaktierung mindestens eines Wicklungsdrahts eines Stators eines Elektromotors ist im Wesentlichen planar und weist entlang einer Längsachse, welche durch die Mitte eines Kontaktierungsabschnitts verläuft, drei aufeinander folgende Abschnitte auf: einen Befestigungsabschnitt zur Befestigung des Kontaktelements an einem Stator, einen Aufnahmeabschnitt zur Aufnahme und zur elektrischen Kontaktierung des Wicklungsdrahts, und den Kontaktierungsabschnitt zur elektrischen Verbindung des Kontaktelements mit einer Motorelektronik. Der Aufnahmeabschnitt des Kontaktelements weist einen entlang der Längsachse verlaufenden Basisabschnitt auf, welcher eine geringere Breite aufweist als der Kontaktierungsabschnitt. An dem Basisabschnitt ist seitlich eine Haltevorrichtung angeordnet, welche zur Anordnung des Wicklungsdrahts in der Haltevorrichtung ausgebildet ist und welche einen in Längsrichtung von dem Befestigungsabschnitt weg weisenden Schenkel aufweist. Bei der Montage des Elektromotors wird der Wicklungsdraht des Stators in der Haltevorrichtung angeordnet. Durch Umformen des Schenkels der Haltevorrichtung wird ein zuverlässiger elektrischer Kontakt zwischen dem Kontaktelement und dem Wicklungsdraht geschaffen. Zusätzlich kann der Schenkel mit dem Wicklungsdraht verschweißt werden, beispielweise mittels Widerstandspressschweißen.

Dadurch, dass der Basisabschnitt des Kontaktelements eine geringere Breite aufweist als der Kontaktierungsabschnitt, weist das Kontaktelement nur eine geringe Ausdehnung in einer Querrichtung senkrecht zur Längsachse auf. In Verbindung mit der planaren Form des Kontaktelements ermöglicht dies ein besonders kompaktes Kontaktelement. Hierdurch kann das erfindungsgemäße Kontaktelement bereits vor der Bewicklung des Statorkörpers an diesem angebracht werden, ohne dass dadurch der bewickelbare Querschnitt des Statorkörpers signifikant reduziert wird.

Beispielweise kann das Kontaktelement bei einer Herstellung des Statorkörpers mittels Spritzgießen in die Gussform eingelegt werden, sodass keine zusätzlichen Befestigungsmittel und Prozessschritte für die Befestigung des Kontaktelements am Stator erforderlich sind. Die planare Form des Kontaktelements erlaubt ferner eine besonders einfache Herstellung des Kontaktelements. Beispielsweise kann das Kontaktelement direkt aus einem Metallblech ausgestanzt werden und benötigt keine folgenden Umformprozesse.

Vorzugsweise ist der Schenkel der Haltevorrichtung über einen Bogenabschnitt mit dem Basisabschnitt verbunden, welcher eine besonders zuverlässige Aufnahme und elektrische Kontaktierung des Wicklungsdrahts ermöglicht. Ferner kann hierdurch eine hohe Festigkeit des Kontaktelements im montierten Zustand erzielt werden.

Besonders bevorzugt entspricht der Innenradius des Bogenabschnitts im Wesentlichen dem Radius des Wicklungsdrahts. Dies ermöglicht ein Umformen des Schenkels zur Fixierung des Wicklungsdrahts in der Haltevorrichtung ohne signifikante Verformung des Wicklungsdrahts. Dies ermöglicht eine zuverlässige Befestigung und elektrische Kontaktierung des Wicklungsdrahts.

In einer bevorzugten Ausführung der Erfindung ist der Schenkel der Haltevorrichtung kürzer als der Basisabschnitt der Haltevorrichtung. Dies ermöglicht es, den Schenkel zur Fixierung des Wicklungsdrahts derart umzuformen, dass das freie Ende des Schenkels nach der Montage in Längsrichtung unterhalb des Kontaktierungsabschnitts angeordnet ist. Dies ermöglicht im montierten Zustand eine besonders geringe Ausdehnung des Kontaktelements in der Querrichtung.

Vorteilhafterweise weist ein freies Ende des Schenkels vor der Montage von der Längsachse weg und nach der Montage zu der Längsachse hin. Dadurch, dass das freie Ende des Schenkels vor der Montage von der Längsachse weg weist, kann der Wicklungsdraht beim Wickeln einfach von der Haltevorrichtung aufgenommen werden. Bei der Montage wird das freie Ende des Schenkels zur Fixierung des Wicklungsdrahts umgeformt, sodass das freie Ende nach der Montage des Schenkels in Richtung der Längsachse weist. Dies erlaubt eine einfache Montage des Elektromotors.

In einer vorteilhaften Ausführung der Erfindung ist der Abstand zwischen dem Basisabschnitt und dem freien Ende des Schenkels vor der Montage größer als der Durchmesser des Wicklungsdrahts und nach der Montage geringer als der Durchmesser des Wicklungsdrahts. Dies ermöglicht vor der Montage ein einfaches Einführen des Wicklungsdrahts in die Haltevorrichtung und verhindert im montierten Zustand ein Herausrutschen des Wicklungsdrahts aus der Haltevorrichtung in Längsrichtung.

Vorzugsweise ragt das freie Ende des Schenkels vor der Montage seitlich über den Kontaktierungsabschnitt hinaus, sodass der Wicklungsdraht zuverlässig über den Schenkel in den Bogen der Haltevorrichtung geführt werden kann. Dies ermöglicht eine einfache Montage des Elektromotors.

In einer bevorzugten Ausführung der Erfindung weist der Schenkel vor der Montage einen Winkel zwischen 20° und 50° bezüglich des Basisabschnitts auf. Dies ermöglicht eine zuverlässige Führung des Wicklungsdrahts in die Haltevorrichtung und somit eine einfache Montage des Elektromotors.

Vorteilhafterweise verläuft das Kontaktelement auf der dem Schenkel gegenüberliegenden Seite im Wesentlichen geradlinig und parallel zu der Längsachse. Hierdurch kann das Kontaktelement mit geringem Verschnitt hergestellt werden und weist gleichzeitig eine ausreichende Haltbarkeit auf.

In einer vorteilhaften Ausführung der Erfindung entspricht der Breitenunterschied zwischen dem Basisabschnitt und dem Kontaktierungsabschnitt im Wesentlichen dem Durchmesser des Wicklungsdrahts, sodass der Wicklungsdraht in dem Kontaktelement im Wesentlichen innerhalb der Breitenausdehnung der Kontaktfahne aufgenommen wird. Dies erlaubt ein Kontaktelement mit einer besonders geringen Ausdehnung in Querrichtung, welche im Wesentlichen der Querausdehnung des Kontaktierungsabschnitts entspricht.

Vorzugsweise beträgt der Breitenunterschied zwischen dem Basisabschnitt und dem Kontaktierungsabschnitt weniger als die halbe Breite des Kontaktierungsabschnitts, sodass eine ausreichende mechanische Stabilität des Basisabschnitts und somit des Kontaktelements sichergestellt ist.

In einer bevorzugten Ausführung der Erfindung weist der Schenkel im unverformten Zustand eine Breite auf, welche dem 0,7- bis 1,1-Fachen der Materialstärke des Kontaktelements entspricht. Dies erlaubt eine zuverlässige und niederohmige elektrische Kontaktierung des Wicklungsdrahts durch den Schenkel bei gleichzeitig geringer Querausdehnung des Kontaktelements.

Vorteilhafterweise entspricht die elektrisch wirksame Querschnittfläche des Kontaktelements, welche durch das Produkt aus der Basisabschnittbreite und der Materialstärke des Kontaktelements bestimmt ist, im Wesentlichen der doppelten Querschnittfläche des Wicklungsdrahts. Dies ermöglicht ein kompaktes Kontaktelement bei gleichzeitig geringen elektrischen Verlusten im Kontaktelement.

In einer vorteilhaften Ausführung der Erfindung besteht das Kontaktelement aus einem Werkstoff mit einem geringen spezifischen elektrischen Widerstand, beispielsweise aus hoch-leitfähigem Kupfer. Dies ermöglicht eine besonders niederohmige elektrische Kontaktierung des Wicklungsdrahts, wodurch die elektrischen Verluste des Elektromotors minimiert werden.

Vorzugsweise ist das Kontaktelement beschichtet, beispielsweise mit einer Zinn-Silber-Legierung, um eine besonders zuverlässige Schweißverbindung zwischen dem Kontaktelement und dem Wicklungsdraht zu ermöglichen.

Ein Ausführungsbeispiel eines erfindungsgemäßen Kontaktelements zur elektrischen Kontaktierung mindestens eines Wicklungsdrahts eines Stators eines Elektromotors wird nachfolgend anhand der beigefügten Figuren beschrieben, wobei
Figur 1 eine Seitenansicht eines erfindungsgemäßen Kontaktelements vor der Montage zeigt, und
Figur 2 das Kontaktelement aus Figur 1 im montierten Zustand zeigt.

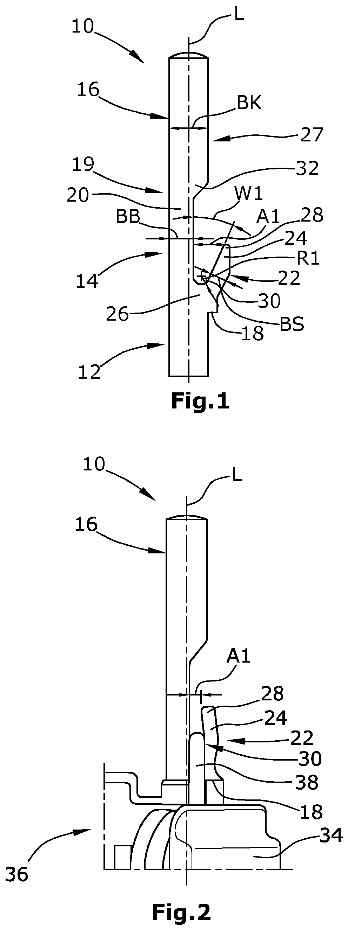

Figur 1 zeigt ein erfindungsgemäßes Kontaktelement 10, welches im Wesentlichen planar ist und welches in der Haupterstreckungsrichtung entlang einer Längsachse L drei aufeinander folgende Abschnitte aufweist: einen Befestigungsabschnitt 12, einen Aufnahmeabschnitt 14 und einen Kontaktierungsabschnitt 16. Im vorliegenden Ausführungsbeispiel besteht das Kontaktelement 10 aus Kupfer und weist eine Beschichtung aus einer Zinn-Silber-Legierung auf. Auf einer ersten Querseite 19 verläuft das Kontaktelement 10 im Wesentlichen geradlinig und parallel zu der Längsachse L, welche durch die Mitte des Kontaktierungsabschnitts 16 verläuft.

Der Befestigungsabschnitt 12 ist zur Befestigung des Kontaktelements 10 an einem Stator 36 eines Elektromotors vorgesehen. Der Befestigungsabschnitt 12 ist im Wesentlichen rechteckförmig ausgebildet und verläuft entlang der Längsachse L. Der Befestigungsabschnitt 12 weist an dem dem Aufnahmeabschnitt 14 zugewandten Längsende einen seitlichen Montagevorsprung 18 auf.

Der Aufnahmeabschnitt 14 ist zur Aufnahme und zur elektrischen Kontaktierung eines Wicklungsdrahts 38 einer Statorspule des Elektromotors vorgesehen. Der Aufnahmeabschnitt 14 umfasst einen Basisabschnitt 20 und eine seitlich an dem Basisabschnitt 20 angeordnete Haltevorrichtung 22 mit einem Schenkel 24 und einem Bogenabschnitt 26. Die Haltevorrichtung 22 ist auf einer zweiten Querseite 27 des Kontaktelements 10 angeordnet, welche der ersten Querseite 19 gegenüberliegt.

Der Basisabschnitt 20 ist im Wesentlichen rechteckförmig ausgebildet und verläuft entlang der Längsachse L. Der Basisabschnitt 20 weist eine geringere Breite BB auf als eine Breite BK des Kontaktierungsabschnitts 16. Der Basisabschnitt 20 ist mindestens halb so breit wie der Kontaktierungsabschnitt 16. Der Unterschied zwischen der Breite BB und der Breite BK entspricht hierbei im Wesentlichen dem Durchmesser des Wicklungsdrahts und das Produkt aus der Breite BB und der Materialstärke des Kontaktelements 10 entspricht im Wesentlichen der doppelten Querschnittfläche des Wicklungsdrahts. Der Schenkel 24 verläuft im Wesentlichen geradlinig und weist in Längsrichtung von dem Befestigungsabschnitt 12 weg und in Querrichtung von der Längsachse L weg. Im vorliegenden Ausführungsbeispiel weist der Schenkel eine Breite BS auf, welche dem 0,7- bis 1,1-Fachen der Materialstärke des Kontaktelements entspricht. Der Schenkel 24 weist bezüglich des Basisabschnitts 20 einen Winkel W1 von etwa 35° auf. Der Schenkel 24 ist kürzer als der Basisabschnitt 20. Der Schenkel 24 ist über den Bogenabschnitt 26 mit dem Basisabschnitt 20 verbunden. Der Abstand A1 zwischen einem freien Ende 28 des Schenkels 24, welches seitlich über den Kontaktierungsabschnitt 16 hinausragt, und dem Basisabschnitt 20 ist größer als der Durchmesser des Wicklungsdrahts. Der Bogenabschnitt 26 weist einen Innenradius R1 auf, welcher im Wesentlichen dem Radius des Wicklungsdrahts entspricht. Die Öffnung 30 des Bogenabschnitts 26 wird seitlich durch den Basisabschnitt 20 und den Schenkel 24 eingefasst und weist in Richtung des Kontaktierungsabschnitts 16.

Der Kontaktierungsabschnitt 16 ist zur Schaffung einer elektrischen Verbindung zwischen dem Kontaktelement 10 und einer Motorelektronik vorgesehen. Der Kontaktierungsabschnitt 16 verläuft auf den Querseiten 19, 27 im Wesentlichen parallel zu der Längsachse L. An dem zu dem Aufnahmeabschnitt 14 gerichteten Längsende weist der Kontaktierungsabschnitt 16 einen Übergangsabschnitt 32 auf. In dem Übergangsabschnitt 32 ändert sich die Breite des Kontaktierungsabschnitts 16 stetig von der Breite BK zu der Breite BB.

Figur 2 zeigt das Kontaktelement 10 im montierten Zustand. Bei der Montage wird das Kontaktelement 10 mit dem Befestigungsabschnitt 12 bis zur Anlage des Montagevorsprungs 18 in eine entsprechende Aufnahmevorrichtung eines Statorkörpers 34 des Stators 36 des Elektromotors eingeschoben und an dem Statorkörper 34 befestigt.

Bei der Montage des Elektromotors wird der Wicklungsdraht 38 in die Bogenabschnittöffnung 30 der Haltevorrichtung 22 eingeführt. Hierbei dient der seitlich über den Kontaktierungsabschnitt 16 hinausragende Schenkel 24 als Führung für den Wicklungsdraht 38. Zur Fixierung des Wicklungsdrahts 38 in der Haltevorrichtung 22 wird das freie Ende 28 des Schenkels 24 in Richtung der Längsachse L umgeformt, sodass das freie Ende 28 nach der Montage in Richtung der Längsachse L weist. Hierdurch verringert sich der Abstand A1 zwischen dem freien Ende 28 und dem Basisabschnitt 20 auf einen Wert kleiner als der Durchmesser des Wicklungsdrahts 38.

Das erfindungsgemäße Kontaktelement ist einfach und kompakt aufgebaut und erlaubt eine zuverlässige elektrische Kontaktierung des Wicklungsdrahts des Stators des Elektromotors. Insbesondere ermöglicht es der kompakte Aufbau des erfindungsgemäßen Kontaktelements das Kontaktelement vor der Bewicklung des Stators an diesem zu befestigen. Hierbei verhindert die geringe Querausdehnung des Kontaktelements, dass der Schenkel des Kontaktelements in den Wicklungsraum des Stators ragt, wodurch eine Bewicklung des Statorkörpers mit dem Wicklungsdraht trotz des vormontierten Kontaktelements ermöglicht wird.

Es sollte deutlich sein, dass der Schutzbereich der vorliegenden Anmeldung nicht auf die beschriebenen Ausführungsbeispiele beschränkt ist. Insbesondere kann die Form des Aufnahmeabschnitts an verschiedene Wicklungsdrahtdurchmesser und Bewicklungsverfahren angepasst werden. Beispielsweise kann der Schenkel vor der Montage in einem anderen Winkel zu dem Basisabschnitt angeordnet werden, um das Kontaktelement an verschiedene Bewicklungsmethoden anzupassen. Ferner sind auch andere Formen des Befestigungsabschnitts und des Kontaktierungsabschnitts denkbar, um das Kontaktelement an verschiedene Ausführungen des Statorkörpers und der Motorelektronik anzupassen.

### Bezugszeichenliste

- 10: Kontaktelement
- 12: Befestigungsabschnitt
- 14: Aufnahmeabschnitt
- 16: Kontaktierungsabschnitt
- 18: Montagevorsprung
- 19: erste Querseite
- 20: Basisabschnitt
- 22: Haltevorrichtung
- 24: Schenkel
- 26: Bogenabschnitt
- 27: zweite Querseite
- 28: freies Schenkelende
- 30: Bogenabschnittöffnung
- 32: Übergangsabschnitt
- 34: Statorkörper
- 36: Stator
- 38: Wicklungsdraht
- A1: Abstand
- BB: Basisabschnittbreite
- BK: Kontaktierungsabschnittbreite
- BS: Schenkelbreite
- L: Längsachse
- R1: Bogenabschnittinnendurchmesser
- W1: Winkel

## Patentansprüche

1. Kontaktelement (10) zur elektrischen Kontaktierung mindestens eines Wicklungsdrahts (38) eines Stators (36) eines Elektromotors, welches planar ist und entlang einer Längsachse (L), welche durch die Mitte eines Kontaktierungsabschnitts (16) des Kontaktelements (10) verläuft, drei aufeinander folgende Abschnitte (12,14,16) aufweist:
einen Befestigungsabschnitt (12) zur Befestigung des Kontaktelements (10) an dem Stator (36),
einen Aufnahmeabschnitt (14) zur Aufnahme und zur elektrischen Kontaktierung des Wicklungsdrahts (38), und
den Kontaktierungsabschnitt (16) zur elektrischen Verbindung des Kontaktelements (10) mit einer Motorelektronik,
**dadurch gekennzeichnet, dass**
der Aufnahmeabschnitt (14) einen entlang der Längsachse (L) des Kontaktelements (10) verlaufenden Basisabschnitt (20) aufweist, welcher quer zur Längsachse (L) des Kontaktelements (10) eine geringere Breite (BB) aufweist als eine Breite (BK) des Kontaktierungsabschnitt (16) quer zur Längsachse (L) des Kontaktelements (10), und
wobei seitlich an dem Basisabschnitt (20) eine Haltevorrichtung (22) angeordnet ist, welche zur Anordnung des Wicklungsdrahts (38) in der Haltevorrichtung (22) ausgebildet ist und welche einen in Richtung der Längsachse (L) des Kontaktelements (10) und in einer Richtung quer zur Längsachse (L) des Kontaktelements (10) von dem Befestigungsabschnitt (12) wegweisenden Schenkel (24) aufweist.

2. Kontaktelement (10) nach Anspruch 1,
**dadurch gekennzeichnet, dass**
der Schenkel (24) über einen Bogenabschnitt (26) mit dem Basisabschnitt (20) verbunden ist.

3. Kontaktelement (10) nach Anspruch 2,
**dadurch gekennzeichnet, dass**
der Innenradius (RI) des Bogenabschnitts (26) dem Radius des Wicklungsdrahts (38) entspricht.

4. Kontaktelement (10) nach einem der vorhergehenden Ansprüche,
**dadurch gekennzeichnet, dass**
der Schenkel (24) in Richtung der Längsachse (L) des Kontaktelements (10) kürzer als der Basisabschnitt (20) ist.

5. Kontaktelement (10) nach einem der vorhergehenden Ansprüche,
**dadurch gekennzeichnet, dass**
ein freies Ende (28) des Schenkels (24) vor der Montage von der Längsachse (L) des Kontaktelements (10) weg weist und nach der Montage zu der Längsachse (L) des Kontaktelements (10) hin weist.

6. Kontaktelement (10) nach einem der vorhergehenden Ansprüche,
**dadurch gekennzeichnet, dass**
der Abstand (Ai) zwischen dem Basisabschnitt (20) und dem freien Ende (28) des Schenkels (24) vor der Montage größer ist als der Durchmesser des Wicklungsdrahts (38) und nach der Montage geringer ist als der Durchmesser des Wicklungsdrahts (38).

7. Kontaktelement (10) nach einem der vorhergehenden Ansprüche,
**dadurch gekennzeichnet, dass**
das freie Ende (28) des Schenkels (24) vor der Montage in einer Querrichtung zu der Längsachse (L) des Kontaktelements (10) über den Kontaktierungsabschnitt (16) hinausragt.

8. Kontaktelement (10) nach einem der vorhergehenden Ansprüche,
**dadurch gekennzeichnet, dass**
der Schenkel (24) vor der Montage einen Winkel (WI) zwischen 20° und 50° bezüglich der Längsachse (L) des Kontaktelements (10) aufweist.

9. Kontaktelement (10) nach einem der vorhergehenden Ansprüche,
**dadurch gekennzeichnet, dass**
das Kontaktelement (10) auf der dem Schenkel gegenüberliegenden Seite (19) geradlinig und parallel zu der Längsachse (L) des Kontaktelements (10) verläuft.

10. Kontaktelement (10) nach einem der vorhergehenden Ansprüche,
**dadurch gekennzeichnet, dass**
der Breitenunterschied zwischen dem Basisabschnitt (20) und dem Kontaktierungsabschnitt (16) dem Durchmesser des Wicklungsdrahts (38) entspricht.

11. Kontaktelement (10) nach einem der vorhergehenden Ansprüche,
**dadurch gekennzeichnet, dass**
der Breitenunterschied zwischen dem Basisabschnitt (20) und dem Kontaktierungsabschnitt (16) weniger als die halbe Breite (BK) des Kontaktierungsabschnitts (16) quer zur Längsachse (L) des Kontaktelements (10) beträgt.

12. Kontaktelement (10) nach einem der vorhergehenden Ansprüche,
**dadurch gekennzeichnet, dass**
der Schenkel (24) in einem unverformten Zustand eine Breite (BS) quer zu einer Längserstreckung des Schenkels (24) aufweist, welche dem 0,7- bis 1,1-Fachen der Materialstärke des Kontaktelements (10) entspricht.

13. Kontaktelement (10) nach einem der vorhergehenden Ansprüche,
**dadurch gekennzeichnet, dass**
die elektrisch wirksame Querschnittfläche des Kontaktelements (10), welche durch das Produkt aus der Basisabschnittbreite (BB) und der Materialstärke des Kontaktelements (10) bestimmt ist, der doppelten Querschnittfläche des Wicklungsdrahts entspricht.

14. Kontaktelement (10) nach einem der vorhergehenden Ansprüche,
**dadurch gekennzeichnet, dass**
das Kontaktelement (10) beschichtet ist.

## Claims

1. A contact element (10) for electrically contacting at least one winding wire (38) of a stator (36) of an electric motor, which is substantially planar and has three successive portions (12, 14, 16) along a longitudinal axis (L) which runs through the centre of a contacting portion (16) of the contact element (10):
a fastening portion (12) for fastening the contact element (10) to the stator (36),
a receiving portion (14) for receiving and electrically contacting the winding wire (38), and
the contacting portion (16) for electrically connecting the contact element (10) to motor electronics,
**characterized in that**
the receiving portion (14) has a base portion (20) running along the longitudinal axis (L) of the contact element (10) and which, transversely to the longitudinal axis (L) of the contact element (10), has a smaller width (BB) than a width (BK) of the contacting portion (16) transversely to the longitudinal axis (L) of the contact element (10), and
wherein a holding device (22) is arranged laterally on the base portion (20), which holding device is configured for arrangement of the winding wire (38) in the holding device (22) and which has a leg (24) pointing away from the fastening portion (12) in the direction of the longitudinal axis (L) of the contact element (10) and in a direction transversely to the longitudinal axis (L) of the contact element (10).

2. The contact element (10) according to Claim 1,
**characterized in that**
the leg (24) is connected to the base portion (20) via an arc portion (26).

3. The contact element (10) according to Claim 2,
**characterized in that**
the inner radius (RI) of the arc portion (26) corresponds to the radius of the winding wire (38).

4. The contact element (10) according to one of the preceding claims,
**characterized in that**
the leg (24) is shorter than the base portion (20) in the direction of the longitudinal axis (L) of the contact element (10).

5. The contact element (10) according to one of the preceding claims,
**characterized in that**
a free end (28) of the leg (24) faces away from the longitudinal axis (L) of the contact element (10) prior to assembly and faces the longitudinal axis (L) of the contact element (10) after assembly.

6. The contact element (10) according to one of the preceding claims,
**characterized in that**
the distance (Ai) between the base portion (20) and the free end (28) of the leg (24) prior to assembly is greater than the diameter of the winding wire (38), and after assembly is less than the diameter of the winding wire (38).

7. The contact element (10) according to one of the preceding claims,
**characterized in that**
the free end (28) of the leg (24) protrudes beyond the contacting portion (16) in a transverse direction to the longitudinal axis (L) of the contact element (10) prior to assembly.

8. The contact element (10) according to one of the preceding claims,
**characterized in that**
the leg (24) has an angle (WI) between 20° and 50° with respect to the longitudinal axis (L) of the contact element (10) prior to assembly.

9. The contact element (10) according to one of the preceding claims,
**characterized in that**
the contact element (10) runs rectilinearly and parallel to the longitudinal axis (L) of the contact element (10) on the side (19) opposite the leg.

10. The contact element (10) according to one of the preceding claims,
**characterized in that**
the difference in width between the base portion (20) and the contacting portion (16) corresponds to the diameter of the winding wire (38).

11. The contact element (10) according to one of the preceding claims,
**characterized in that**
the difference in width between the base portion (20) and the contacting portion (16) is less than half the width (BK) of the contacting portion (16) transversely to the longitudinal axis (L) of the contact element (10).

12. The contact element (10) according to one of the preceding claims,
**characterized in that**
the leg (24) in an undeformed state has a width (BS) transversely to a longitudinal extent of the leg (24) which corresponds to 0.7 to 1.1 times the material thickness of the contact element (10).

13. The contact element (10) according to one of the preceding claims,
**characterized in that**
the electrically effective cross-sectional area of the contact element (10), which is determined by the product of the base portion width (BB) and the material thickness of the contact element (10) corresponds to twice the cross-sectional area of the winding wire.

14. The contact element (10) according to one of the preceding claims,
**characterized in that**
the contact element (10) is coated.

## Revendications

1. Elément de contact (10) pour la mise en contact électrique d'au moins un fil d'enroulement (38) d'un stator (36) d'un moteur électrique, qui est planaire et présente, le long d'un axe longitudinal (L), qui passe par le centre d'une section de mise en contact (16) de l'élément de contact (10), trois sections (12, 14, 16) successives :
une section de fixation (12) destinée à fixer l'élément de contact (10) sur le stator (36),
une section de réception (14) destinée à recevoir et à mettre en contact électrique du fil d'enroulement (38), et
la section de mise en contact (16) destinée à relier électriquement l'élément de contact (10) à une électronique de moteur,
**caractérisé en ce que**
la section de réception (14) présente une section de base (20) s'étendant le long de l'axe longitudinal (L) de l'élément de contact (10), laquelle présente, transversalement à l'axe longitudinal (L) de l'élément de contact (10), une largeur (BB) inférieure à une largeur (BK) de la section de mise en contact (16) transversalement à l'axe longitudinal (L) de l'élément de contact (10), et
dans lequel un dispositif de maintien (22) est disposé latéralement sur la section de base (20), lequel est réalisé pour disposer le fil d'enroulement (38) dans le dispositif de maintien (22) et qui présente une branche (24) s'écartant de la section de fixation (12) dans une direction de l'axe longitudinal (L) de l'élément de contact (10) et dans une direction transversalement à l'axe longitudinal (L) de l'élément de contact (10).

2. Élément de contact (10) selon la revendication 1,
**caractérisé en ce que**
la branche (24) est reliée à la section de base (20) par l'intermédiaire d'une section courbe (26).

3. Elément de contact (10) selon la revendication 2,
**caractérisé en ce que**
le rayon intérieur (RI) de la section courbe (26) correspond au rayon du fil d'enroulement (38).

4. Elément de contact (10) selon l'une quelconque des revendications précédentes,
**caractérisé en ce que**
la branche (24) est plus courte que la section de base (20) dans la direction de l'axe longitudinal (L) de l'élément de contact (10).

5. Elément de contact (10) selon l'une quelconque des revendications précédentes,
**caractérisé en ce que**
une extrémité libre (28) de la branche (24) pointe à l'écart de l'axe longitudinal (L) de l'élément de contact (10) avant le montage et pointe en direction de l'axe longitudinal (L) de l'élément de contact (10) après le montage.

6. Elément de contact (10) selon l'une quelconque des revendications précédentes,
**caractérisé en ce que**
la distance (Ai) entre la section de base (20) et l'extrémité libre (28) de la branche (24) avant le montage est supérieure au diamètre du fil d'enroulement (38) et après le montage est inférieure au diamètre du fil d'enroulement (38).

7. Elément de contact (10) selon l'une quelconque des revendications précédentes,
**caractérisé en ce que**
l'extrémité libre (28) de la branche (24) dépasse de la section de mise en contact (16) avant le montage dans une direction transversale par rapport à l'axe longitudinal (L) de l'élément de contact (10).

8. Elément de contact (10) selon l'une quelconque des revendications précédentes,
**caractérisé en ce que**
la branche (24) présente avant le montage un angle (Wl) compris entre 20° et 50° par rapport à l'axe longitudinal (L) de l'élément de contact (10).

9. Elément de contact (10) selon l'une quelconque des revendications précédentes,
**caractérisé en ce que**
l'élément de contact (10) s'étend sur le côté opposé à la branche (19) de manière rectiligne et de manière parallèle par rapport à l'axe longitudinal (L) de l'élément de contact (10).

10. Elément de contact (10) selon l'une quelconque des revendications précédentes,
**caractérisé en ce que**
la différence de largeur entre la section de base (20) et la section de mise en contact (16) correspond au diamètre du fil d'enroulement (38).

11. Elément de contact (10) selon l'une quelconque des revendications précédentes,
**caractérisé en ce que**
la différence de largeur entre la section de base (20) et la section de mise en contact (16) est inférieure à la moitié de la largeur (BK) de la section de mise en contact (16) transversalement à l'axe longitudinal (L) de l'élément de contact (10).

12. Elément de contact (10) selon l'une quelconque des revendications précédentes,
**caractérisé en ce que**
la branche (24) présente, dans un état non déformé, une largeur (BS), transversalement à une extension longitudinale de la branche (24), qui correspond à 0,7 à 1,1 fois l'épaisseur de matériau de l'élément de contact (10).

13. Elément de contact (10) selon l'une quelconque des revendications précédentes,
**caractérisé en ce que**
la surface de section transversale électriquement efficace de l'élément de contact (10), qui est déterminée par le produit de la largeur de section de base (BB) et de l'épaisseur de matériau de l'élément de contact (10), correspond au double de la surface de section transversale du fil d'enroulement.

14. Elément de contact (10) selon l'une quelconque des revendications précédentes,
**caractérisé en ce que**
l'élément de contact (10) est revêtu.
